(19) Europäisches Patentamt
European Patent Office
Office européen des brevets

(11) EP 4 683 202 A1

(12) EUROPEAN PATENT APPLICATION
published in accordance with Art. 153(4) EPC

(43) Date of publication:
21.01.2026 Bulletin 2026/04

(51) International Patent Classification (IPC):
H02M 7/48 (2007.01)    G05F 1/67 (2006.01)
H02J 3/38 (2026.01)

(21) Application number: 24770307.7

(22) Date of filing: 07.02.2024

(52) Cooperative Patent Classification (CPC):
G05F 1/67; H02J 3/38; H02M 7/48

(86) International application number:
PCT/JP2024/004010

(87) International publication number:
WO 2024/190188 (19.09.2024 Gazette 2024/38)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 14.03.2023 JP 2023039553

(71) Applicant: KAWASAKI JUKOGYO KABUSHIKI
KAISHA
Kobe-shi, Hyogo 650-8670 (JP)

(72) Inventors:
• UMEZU, Yusuke
  Hyogo 650-8670 (JP)
• SUGIMOTO, Kazushige
  Hyogo 650-8670 (JP)
• ICHIKAWA, Takashi
  Hyogo 650-8670 (JP)
• SEKI, Yuki
  Hyogo 650-8670 (JP)
• YOSHIMURA, Eiji
  Hyogo 650-8670 (JP)

(74) Representative: Witte, Weller & Partner
Patentanwälte mbB
Postfach 10 54 62
70047 Stuttgart (DE)

(54) PHOTOVOLTAIC POWER GENERATION FACILITY, CONTROLLER FOR POWER CONVERTER USED FOR SAME, AND CONTROL METHOD

(57) A controller of a power converter that performs electric power conversion between a photovoltaic panel and an AC power supply system, the controller including processing circuitry. The processing circuitry: obtains a frequency in AC wiring that connects between the AC power supply system and the power converter; obtains a maximum power point voltage of the photovoltaic panel; calculates such an operating point voltage target value of the photovoltaic panel as to suppress the frequency from fluctuating by using the maximum power point voltage and the frequency; and generates such a drive signal as to bring a DC voltage outputted from the photovoltaic panel to the operating point voltage target value of the photovoltaic panel, and outputs the drive signal to the power converter.

FIG. 1

EP 4 683 202 A1

**Description**

**Technical Field**

The present disclosure relates to photovoltaic power generation equipment, a controller of a power converter used therein, and a method of controlling the power converter.

**Background Art**

Photovoltaic power generation equipment has been known as power generation equipment connected to an AC power supply system such as a microgrid. Photovoltaic power generation equipment has been attracting attention since renewable energy has been actively adopted due to, for example, abolition of large-scale thermal power plants. The number of pieces of photovoltaic power generation equipment connected to AC power supply systems has also been increasing.

Photovoltaic power generation equipment outputs electric power generated by a photovoltaic panel to an AC power supply system via a power converter. General power generation equipment including a rotor has capability to adjust the output power in response to frequency fluctuations caused by variations in loads connected to the AC power supply system. However, photovoltaic power generation equipment does not have such capability to adjust the output power in response to frequency fluctuations.

In this respect, Patent Literature 1 indicated below discloses, in photovoltaic power generation equipment connected to an AC power supply system, a configuration to correct a control signal of a power converter based on a frequency fluctuation of the AC power supply system.

**Citation List**

**Patent Literature**

PTL 1: Japanese Patent No. 6592232

**Summary of Invention**

**Technical Problem**

However, in the configuration of Patent Literature 1, a target value of a voltage outputted by the photovoltaic power generation equipment is determined from a DC voltage and a DC current in DC wiring between a photovoltaic cell and an inverter circuit that are included in the photovoltaic power generation equipment. An electric current correction value that is based on a frequency fluctuation of the AC power supply system is added to an active power compensation value that is obtained from the voltage target value of the photovoltaic power generation equipment. That is, no matter how much the electric current correction value based on a frequency fluctuation of the AC power supply system is generated, the target value of the voltage outputted by the photovoltaic power generation equipment does not change. Therefore, the configuration described in Patent Literature 1 cannot exert sufficient adjustment capability in response to frequency fluctuations in the AC power supply system.

It is expected that more and more photovoltaic power generation equipment will be connected to AC power supply systems in the future. Therefore, if those photovoltaic power generation equipment lack sufficient adjustment capability in response to frequency fluctuations in the AC power supply systems, it may result in destabilization of the AC power supply systems.

The present disclosure solves the above-described problems, and an object of the present disclosure is to provide: photovoltaic power generation equipment that makes it possible to maintain the stability of an AC power supply system against frequency fluctuations in the system; a controller of a power converter used in the photovoltaic power generation equipment; and a method of controlling the power converter.

**Solution to Problem**

A controller of a power converter according to one aspect of the present disclosure is a controller of a power converter that performs electric power conversion between a photovoltaic panel and an AC power supply system, the controller including processing circuitry. The processing circuitry: obtains a frequency in AC wiring that connects between the AC power supply system and the power converter; obtains a maximum power point voltage of the photovoltaic panel; calculates such an operating point voltage target value of the photovoltaic panel as to suppress the frequency from fluctuating by using the maximum power point voltage and the frequency; and generates such a drive signal as to bring a DC voltage outputted from the photovoltaic panel to the operating point voltage target value of the photovoltaic panel, and outputs the drive signal to the power converter.

Photovoltaic power generation equipment according to another aspect of the present disclosure includes: a photovoltaic panel; a power converter that performs electric power conversion between the photovoltaic panel and an AC power supply system; a frequency obtaining circuit that obtains a frequency in AC wiring that connects between the AC power supply system and the power converter; a maximum power point voltage obtaining circuit that obtains a maximum power point voltage of the photovoltaic panel; and the controller configured as described above.

A method of controlling a power converter according to yet another aspect of the present disclosure is a method of controlling a power converter that performs electric power conversion between a photovoltaic panel and an AC power supply system, the method including: obtaining a frequency in AC wiring that connects between the AC power supply system and the power converter; obtaining a maximum power point voltage of the photovoltaic panel; calculating such an operating point voltage target value of the photovoltaic panel as to suppress the frequency from fluctuating by using the maximum power point voltage and the frequency; and generating such a drive signal as to bring a DC voltage outputted from the photovoltaic panel to the operating point voltage target value of the photovoltaic panel, and outputting the drive signal to the power converter.

**Advantageous Effects of Invention**

The present disclosure makes it possible to maintain the stability of an AC power supply system against frequency fluctuations in the system.

**Brief Description of Drawings**

FIG. 1 is a block diagram showing a schematic configuration of photovoltaic power generation equipment in one embodiment of the present disclosure.
FIG. 2 is a graph showing P-V characteristics of a photovoltaic panel.
FIG. 3 is a block diagram showing the configuration of an operating point voltage target value calculator in processing circuitry of FIG. 1.
FIG. 4 is a block diagram showing the configuration of a power target value calculator in the processing circuitry of FIG. 1.
FIG. 5 is a graph showing changes in the P-V characteristics of the photovoltaic panel corresponding to different irradiances.
FIG. 6 is a graph showing changes in the P-V characteristics of the photovoltaic panel corresponding to changes in panel temperature.
FIG. 7 is a graph showing a relationship of a maximum power point voltage with the panel temperature of FIG. 6.
FIG. 8 is a graph showing changes in frequency, output power, and operating point voltage in Simulation 1 in relation to time.
FIG. 9 is a graph showing changes in irradiance, output power, and operating point voltage in Simulation 2 in relation to time.
FIG. 10 is a block diagram showing a schematic configuration of photovoltaic power generation equipment in one variation of the present disclosure.

**Description of Embodiments**

Hereinafter, embodiments of the present disclosure are described with reference to the drawings. In the drawings, identical elements, or elements serving the same function, are denoted by the same reference signs, and repetitive descriptions are thereby omitted below.

[System Configuration]

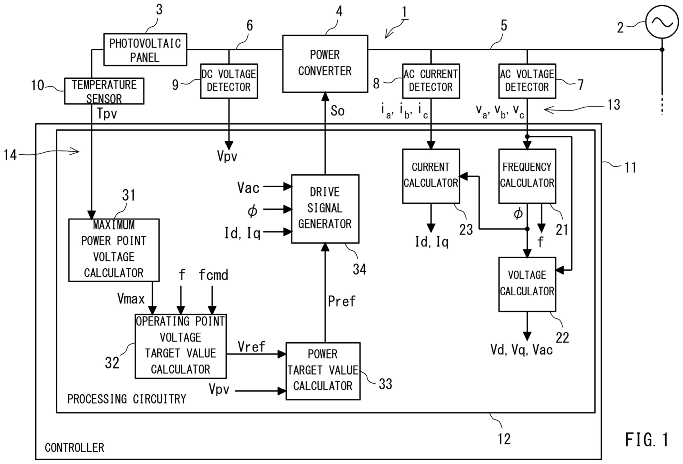

FIG. 1 is a block diagram showing a schematic configuration of photovoltaic power generation equipment in one embodiment of the present disclosure. As shown in FIG. 1, photovoltaic power generation equipment 1 in the present embodiment includes a photovoltaic panel 3, a power converter 4, and a controller 11. The power converter 4 is connected to an AC power supply system 2, such as a commercial power supply system. The AC power supply system 2 and the power converter 4 are connected to each other by AC wiring 5. The photovoltaic panel 3 and the power converter 4 are connected to each other by DC wiring 6. The present embodiment illustratively describes a case where the AC power supply system 2 is a three-phase alternating current system.

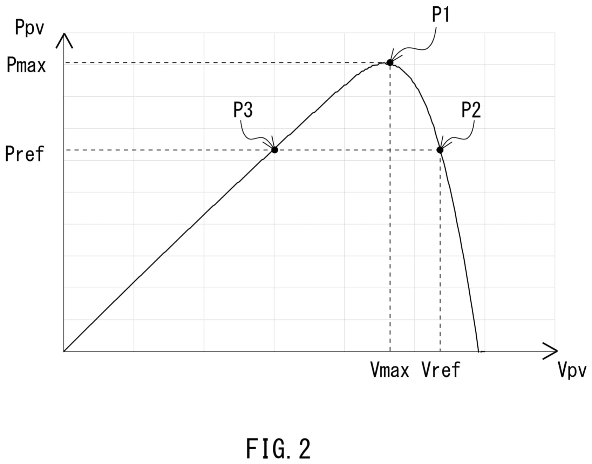

The photovoltaic panel 3 converts solar energy into electrical energy, and outputs the electrical energy. FIG. 2 is a graph showing P-V characteristics of the photovoltaic panel. The graph showing the P-V characteristics, i.e., the characteristics of electric power in relation to voltage, of the photovoltaic panel 3 is convex upward as shown in FIG. 2, in which maximum generated power Pmax is a vertex.

Specifically, in a voltage region lower than the voltage corresponding to the maximum generated power Pmax, the electric power generated by the photovoltaic panel 3 increases in accordance with an increase in the voltage, whereas in a voltage region higher than the voltage corresponding to the maximum generated power Pmax, the electric power generated by the photovoltaic panel 3 decreases in accordance with an increase in the voltage. Hereinafter, the voltage corresponding to the maximum generated power Pmax of the photovoltaic panel 3 is referred to as a maximum power point voltage Vmax. The maximum generated power Pmax and the maximum power point voltage Vmax of the photovoltaic panel 3 change in accordance with irradiance [W/m$^2$] and temperature [°C] as described below.

A general photovoltaic power generation system is controlled to generate electric power at the maximum generated power Pmax, regardless of the state of the AC power supply system 2 connected thereto. This type of control is generally called MPPT (Maximum Power Point Tracking) control.

Meanwhile, in order to make the electric power outputted from the photovoltaic power generation equipment 1 adjustable based on fluctuations in the frequency f of the AC power supply system 2, it is necessary to set a target value of the electric power outputted from the power converter 4 to a value less than the maximum generated power Pmax. Setting a power target value Pref to a value less than the maximum generated power Pmax makes it possible to increase or decrease the power target value Pref in accordance with a fluctuation in the frequency f.

In MPPT control, power output is controlled by a so-called hill climbing method to maximize the electric power obtained. Accordingly, the electric power can be directly used as a control target value. However, in order to adjust the electric power outputted from the power converter 4 to a predetermined target value less than the maximum generated power Pmax, the hill climbing method cannot be used. Therefore, it is difficult to directly set the power target value. On the other hand, in a case where a voltage corresponding to the power target value Pref is known, an operating point at which the output power equals the power target value Pref can be known from the P-V characteristics of the photovoltaic panel 3. Therefore, it is conceivable to use the voltage as a control target value.

In the present embodiment, the voltage in the photovoltaic panel 3 corresponding to the power target value Pref is referred to as an operating point voltage target value Vref. As described above, the photovoltaic panel 3 has the P-V characteristics as shown in FIG. 2. Accordingly, in the P-V characteristics, operating points at which the voltage corresponding to the power target value Pref is attainable include an operating point P2, at which the voltage is higher than the maximum power point voltage Vmax, and an operating point P3, at which the voltage is lower than the maximum power point voltage Vmax. Specifically, in the graph of FIG. 2, which shows a maximum power point P1, which is an operating point at which the output power equals the maximum generated power Pmax, both at the operating point P2 located on the right side of the maximum power point P1 and at the operating point P3 located on the left side of the maximum power point P1, the electric power outputted from the photovoltaic panel 3 is the same value.

In the present embodiment, between the two operating points at which the output power equals the power target value Pref, the voltage at the operating point P2 on the right side is set as the operating point voltage target value Vref.

The photovoltaic power generation equipment 1 includes an AC voltage detector 7 and an AC current detector 8. The AC voltage detector 7 detects a voltage in the AC wiring 5. The AC current detector 8 detects an electric current outputted from the power converter 4 to the AC wiring 5. For example, the AC voltage detector 7 is a transformer known as a PT (Potential Transformer), and the AC current detector 8 is a current transformer known as a CT (Current Transformer). The detected voltage and the detected electric current are inputted to the controller 11.

The photovoltaic power generation equipment 1 further includes a DC voltage detector 9. The DC voltage detector 9 detects a DC voltage Vpv in the DC wiring 6. The DC voltage Vpv detected by the DC voltage detector 9 indicates a DC voltage outputted from the photovoltaic panel 3.

The controller 11 includes processing circuitry 12, which performs various signal processing. The processing circuitry 12 includes a computer, for example, a microcontroller, a personal computer, or a PLC (Programmable Logic Controller). For example, the processing circuitry 12 includes processors, memories, and peripheral circuits.

The processors include, for example, a CPU or MPU. The memories include a ROM, volatile memories such as a RAM and resistor, and nonvolatile memories such as a flash memory. The memories prestore therein control programs for the power converter 4. The peripheral circuits include, for example, an input/output interface. The processors, the memories, and the peripheral circuits perform data communication with each other via a bus. The processors execute control programs to perform arithmetic processing, which will be described below, based on various information stored in the memories.

The functionality of the elements disclosed herein may be implemented using circuitry or processing circuitry which includes general purpose processors, special purpose processors, integrated circuits, ASICs ("Application Specific Integrated Circuits"), conventional circuitry or combinations thereof which are configured or programmed to perform the disclosed functionality. Processors are considered processing circuitry or circuitry as they include transistors and other circuitry therein. In the present specification, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, units, means, or blocks are a combination of hardware and software, the software being used to configure the hardware or processor.

The controller 11 includes the following control blocks: a frequency calculator 21; a voltage calculator 22; a current calculator 23; a maximum power point voltage calculator 31; an operating point voltage target value calculator 32; a power target value calculator 33; and a drive signal generator 34. As mentioned above, each of these control blocks is considered processing circuitry or circuitry. The controller 11 performs processing in each control block to control electric power that the power converter 4 outputs to the AC wiring 5. Hereinafter, these control blocks are described in detail.

[Frequency Calculator]

The frequency calculator 21 performs known PLL (Phase-Locked Loop) calculation to calculate the frequency f and phase $\phi$ in the AC wiring 5 from instantaneous voltages $v_a$, $v_b$, and $v_c$ of the respective phases, which are detected by the AC voltage detector 7. Thus, in the present embodiment, from the instantaneous voltages $v_a$, $v_b$, and $v_c$ detected by the AC voltage detector 7, the processing circuitry 12 obtains voltages Vd and Vq and the frequency f in the AC wiring 5. That is, in the present embodiment, the AC voltage detector 7 and the frequency calculator 21 of the processing circuitry 12 form a frequency obtaining circuit 13.

[Voltage Calculator]

By using an equation shown below, the voltage calculator 22 calculates an AC voltage Vac from the instantaneous voltages $v_a$, $v_b$, and $v_c$ of the respective phases, which are detected by the AC voltage detector 7.
[Math. 1]

$$Vac = \sqrt{v_a^2 + v_b^2 + v_c^2} \quad \cdots (1)$$

The AC voltage Vac is used to generate a drive signal So, which will be described below. Alternatively, instead of calculating the AC voltage Vac as above, a predetermined fixed value may be given as the AC voltage Vac for the purpose of ensuring the stability of the control system.

By using an equation shown below, the voltage calculator 22 calculates a d-axis voltage Vd and a q-axis voltage Vq in a rotating coordinate system for AC voltage, i.e., voltages on the respective coordinate axes in a d-q coordinate system, from the instantaneous voltages $v_a$, $v_b$, and $v_c$ of the respective phases and the phase $\phi$.
[Math. 2]

$$\begin{bmatrix} Vd \\ Vq \end{bmatrix} = \sqrt{\frac{2}{3}} \begin{bmatrix} \cos\phi & \cos\left(\phi - \frac{2}{3}\pi\right) & \cos\left(\phi - \frac{4}{3}\pi\right) \\ -\sin\phi & -\sin\left(\phi - \frac{2}{3}\pi\right) & -\sin\left(\phi - \frac{4}{3}\pi\right) \end{bmatrix} \begin{bmatrix} v_a \\ v_b \\ v_c \end{bmatrix} \quad \cdots (2)$$

[Current Calculator]

By using an equation shown below, the current calculator 23 calculates a d-axis current Id and a q-axis current Iq, which are electric currents on the respective coordinate axes in a rotating coordinate system for AC current, from instantaneous currents $i_a$, $i_b$, and $i_c$ of the respective phases, which are detected by the AC current detector 8, and the phase $\phi$ calculated by the frequency calculator 21.
[Math. 3]

$$\begin{bmatrix} Id \\ Iq \end{bmatrix} = \sqrt{\frac{2}{3}} \begin{bmatrix} \cos\phi & \cos\left(\phi - \frac{2}{3}\pi\right) & \cos\left(\phi - \frac{4}{3}\pi\right) \\ -\sin\phi & -\sin\left(\phi - \frac{2}{3}\pi\right) & -\sin\left(\phi - \frac{4}{3}\pi\right) \end{bmatrix} \begin{bmatrix} i_a \\ i_b \\ i_c \end{bmatrix} \quad \cdots (3)$$

[Operating Point Voltage Target Value Calculator]

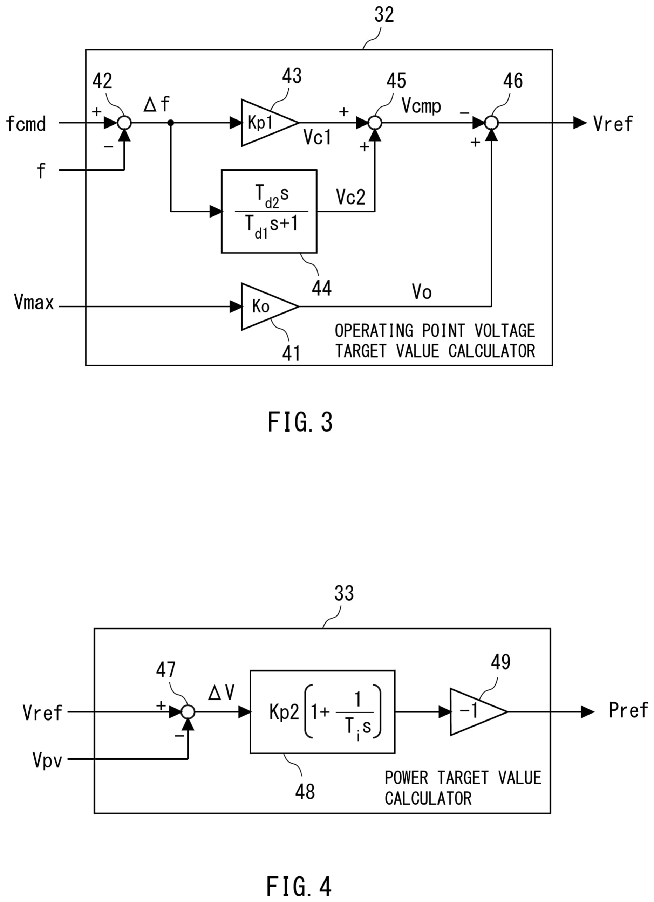

FIG. 3 is a block diagram showing the configuration of the operating point voltage target value calculator in the processing circuitry of FIG. 1. As described below, the maximum power point voltage calculator 31 calculates the maximum power point voltage Vmax of the photovoltaic panel 3 based on a condition indicator indicating the condition of the photovoltaic panel 3. The operating point voltage target value calculator 32 obtains the maximum power point voltage Vmax from the maximum power point voltage calculator 31. The operating point voltage target value calculator 32 calculates the operating point voltage target value Vref in the photovoltaic panel 3 by using the maximum power point voltage Vmax and the frequency f in the AC wiring 5 calculated by the frequency calculator 21. The operating point voltage target value calculator 32 calculates such an operating point voltage target value Vref as to suppress the frequency f from fluctuating.

More specifically, as shown in FIG. 3, the operating point voltage target value calculator 32 includes a multiplier 41, subtracters 42 and 46, a proportional calculator 43, a differentiator 44, and an adder 45. These components 41 to 46 are also part of the processing circuitry 12. The multiplier 41 calculates an operating point voltage reference value Vo by multiplying the maximum power point voltage Vmax by a predetermined coefficient Ko. As described above, in the present embodiment, the operating point voltage target value Vref is set on the right side of the maximum power point P1, i.e., set to coincide with the high-voltage side operating point P2. Accordingly, the coefficient Ko for calculating the operating point voltage reference value Vo, which serves as a reference for the operating point voltage target value Vref, is set to a value greater than 1.

Output power Ppv of the photovoltaic panel 3 corresponding to the operating point voltage reference value Vo is a value less than the maximum generated power Pmax. Accordingly, the photovoltaic power generation equipment 1 can operate the photovoltaic panel 3 in a state where the output power Ppv can be increased or decreased in accordance with a fluctuation in the frequency f.

The subtracter 42 calculates a frequency deviation $\Delta f$ by subtracting the frequency f from a predetermined frequency target value fcmd. In the present embodiment, the operating point voltage target value calculator 32 calculates a correction value for the operating point voltage reference value Vo by performing proportional-derivative calculation on the frequency deviation $\Delta f$.

The proportional calculator 43 calculates a first correction value Vc1 by performing proportional calculation on the frequency deviation $\Delta f$. In FIG. 3, Kp1 represents a proportional gain. The differentiator 44 calculates a second correction value Vc2 by performing differentiation on the frequency deviation $\Delta f$. In a transfer function of differentiation illustratively shown in FIG. 3, coefficients based on a derivative time are illustratively shown in the form of a lagged derivative using $T_{d1}$ and $T_{a2}$. The adder 45 calculates a voltage correction value Vcmp by adding up the first correction value Vc1 and the second correction value Vc2.

In this manner, the operating point voltage target value calculator 32 calculates, as a correction value for the operating point voltage reference value Vo, the voltage correction value Vcmp corresponding to a fluctuation in the frequency f. The subtracter 46 calculates the operating point voltage target value Vref by subtracting the voltage correction value Vcmp from the operating point voltage reference value Vo.

[Power Target Value Calculator]

FIG. 4 is a block diagram showing the configuration of the power target value calculator in the processing circuitry of FIG. 1. The power target value calculator 33 obtains the DC voltage Vpv outputted from the photovoltaic panel 3, and calculates the power target value Pref based on a deviation $\Delta V$ between the DC voltage Vpv and the operating point voltage target value Vref.

To be more specific, the power target value calculator 33 includes a subtracter 47, a proportional-integral calculator 48, and an inverter 49. These components 47 to 49 are also part of the processing circuitry 12. The subtracter 47 calculates the voltage deviation $\Delta V$ by subtracting the DC voltage Vpv detected by the DC voltage detector 9 from the operating point voltage target value Vref calculated by the operating point voltage target value calculator 32. The proportional-integral calculator 48 performs proportional-integral calculation on the voltage deviation $\Delta V$. In FIG. 3, Kp2 represents a proportional gain, and Ti represents an integral time. The inverter 49 inverts the sign of an output value from the proportional-integral calculator 48, and outputs the resulting value as the power target value Pref.

As described above, in the present embodiment, the operating point voltage target value Vref is set on the right side of the maximum power point P1, i.e., set to coincide with the high-voltage side operating point P2. Accordingly, the magnitude relationship between the power target value Pref and the output power Ppv of the photovoltaic panel 3 at the current operating point is opposite to the magnitude relationship between the operating point voltage target value Vref and the DC voltage Vpv at the current operating point.

For example, in a case where the DC voltage Vpv at the current operating point is greater than the operating point voltage target value Vref, it is necessary to shift the operating point from the current operating point to the left, i.e., to the lower voltage side. In this case, the electric power needs to be increased from the output power Ppv indicated by the current operating point. Accordingly, the inverter 49 inverts the sign of the output value from the proportional-integral calculator 48.

[Drive Signal Generator]

The drive signal generator 34 generates such a drive signal So as to bring the DC voltage Vpv outputted from the photovoltaic panel 3 to the operating point voltage target value Vref of the photovoltaic panel. The drive signal generator 34 generates the drive signal So from the electric currents Id, Iq, the AC voltage Vac, and the phase $\phi$ in the AC wiring 5 and the power target value Pref calculated by the power target value calculator 33.

Specifically, by using equations shown below, the drive signal generator 34 calculates electric current target values Id_ref and Iq_ref from the power target value Pref and the AC voltage Vac.

[Math. 4]

$$Id\_ref = \frac{Pref}{Vac} \quad \cdots (4)$$

$$Iq_{ref} = -\frac{Qref}{Vac} \quad \cdots (5)$$

In the present embodiment, a reactive power target value Qref is set to 0. That is, as a result, the q-axis current target value Iq_ref is 0. Accordingly, the drive signal generator 34 may give 0 in advance as a value of the q-axis current target value Iq_ref.

The drive signal generator 34 further calculates such a drive signal So as to bring the electric currents Id and Iq in the AC wiring 5 to the electric current target values Id_ref and Iq_ref. Specifically, the drive signal generator 34 calculates voltage target values Vd_ref and Vq_ref in the AC wiring 5 from the electric current target values Id_ref and Iq_ref by using equations shown below. In the equations below, each of Kd and Kq represents a predetermined gain, and each of $T_{id}$ and $T_{iq}$ represents a predetermined time constant.

[Math. 5]

$$Vd\_ref = Kd\left(1 + \frac{1}{T_{id}s}\right)(Id\_ref - Id) \quad \cdots (6)$$

$$Vq\_ref = Kq\left(1 + \frac{1}{T_{iq}s}\right)(Iq\_ref - Iq) \quad \cdots (7)$$

The drive signal generator 34 further calculates target values $v_{a\_ref}$, $v_{b\_ref}$, and $v_{c\_ref}$ for the respective instantaneous voltages in the three-phase AC wiring 5 from the voltage target values Vd_ref and Vq_ref in the AC wiring 5 by using an equation shown below.
[Math. 6]

$$\begin{bmatrix} v_{a\_ref} \\ v_{b\_ref} \\ v_{c\_ref} \end{bmatrix} = \sqrt{\frac{2}{3}} \begin{bmatrix} \cos\phi & -\sin\phi \\ \cos\left(\phi - \frac{2}{3}\pi\right) & -\sin\left(\phi - \frac{2}{3}\pi\right) \\ \cos\left(\phi - \frac{4}{3}\pi\right) & -\sin\left(\phi - \frac{4}{3}\pi\right) \end{bmatrix} \begin{bmatrix} Vd\_ref \\ Vq\_ref \end{bmatrix} \quad \cdots (8)$$

Based on the calculated target values $v_{a\_ref}$, $v_{b\_ref}$, and $v_{c\_ref}$ for the respective instantaneous voltages, the drive signal generator 34 generates the drive signal So for a switching operation of the power converter 4. For example, the drive signal So is a PWM control signal. The drive signal generator 34 outputs the drive signal So thus generated. The drive signal So is inputted to the power converter 4, and the output voltage to the AC wiring 5 is controlled based on the drive signal So.

[Maximum Power Point Voltage Calculator]

The maximum power point voltage calculator 31 calculates the maximum power point voltage Vmax of the photovoltaic panel 3 based on a condition indicator indicating the condition of the photovoltaic panel 3. In the present embodiment, the maximum power point voltage calculator 31 obtains, as the condition indicator, a panel temperature Tpv of the photovoltaic panel 3 measured by a temperature sensor 10. The maximum power point voltage calculator 31 estimates the maximum power point voltage Vmax from the panel temperature Tpv. Thus, in the present embodiment, the temperature sensor 10 and the maximum power point voltage calculator 31 form a maximum power point voltage obtaining circuit 14 to obtain the maximum power point voltage Vmax of the photovoltaic panel 3.

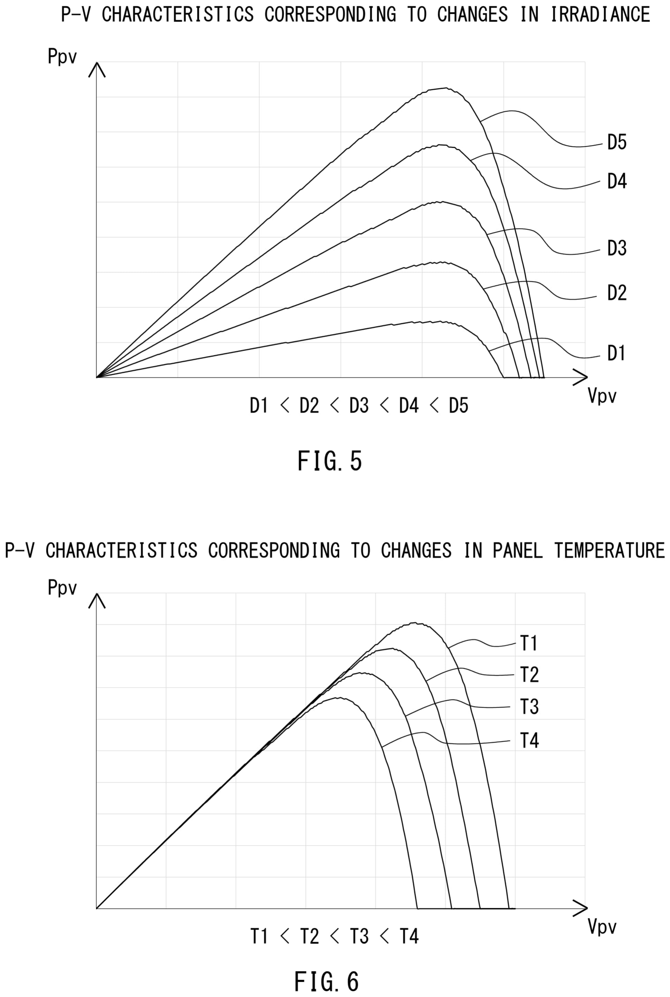

FIG. 5 is a graph showing changes in the P-V characteristics of the photovoltaic panel corresponding to irradiances. The graph of FIG. 5 shows the P-V characteristics corresponding to each of five different irradiances D1 to D5 of the photovoltaic panel 3. In the graph of FIG. 5, the irradiances in ascending order are D1, D2, D3, D4, and D5. FIG. 6 is a graph showing changes in the P-V characteristics of the photovoltaic panel corresponding to changes in panel temperature. The graph of FIG. 6 shows, for the same photovoltaic panel 3 as that of FIG. 5, the P-V characteristics corresponding to each of four different panel temperatures T1 to T4. In the graph of FIG. 6, the panel temperatures in ascending order are T1, T2, T3, and T4.

As shown in FIG. 5, when the irradiance of the photovoltaic panel 3 changes, the maximum power point voltage Vmax does not exhibit a significant change while the maximum generated power Pmax changes to a relatively great degree. For this reason, it is difficult to set the maximum generated power Pmax as a direct target value. Further, detecting the irradiance with high precision is relatively difficult. Therefore, performing highly precise estimation of the maximum generated power Pmax by using irradiance is difficult. In addition, a rapid change in the irradiance may occur due to a change in weather. Accordingly, in the case of estimating the maximum generated power Pmax from the irradiance, it may become necessary to rapidly change the maximum generated power Pmax, and there is a possibility of being unable to follow such rapid changes in the irradiance.

On the other hand, as shown in FIG. 6, when the panel temperature of the photovoltaic panel 3 changes, the maximum power point voltage Vmax changes to a relatively great degree. The panel temperature can be measured with high precision by the known temperature sensor 10. Further, a change in the panel temperature is sufficiently gradual compared to a change in the irradiance. For these reasons, in the present embodiment, the maximum power point voltage Vmax is estimated from the panel temperature. Thus, since the maximum power point voltage Vmax is estimated from the panel temperature, the power target value Vref can be readily set based on the maximum power point voltage Vmax. Therefore, even in a case where the value of the maximum generated power Pmax is unknown, the output power Ppv of the photovoltaic panel 3 can be controlled by using the power target value Vref.

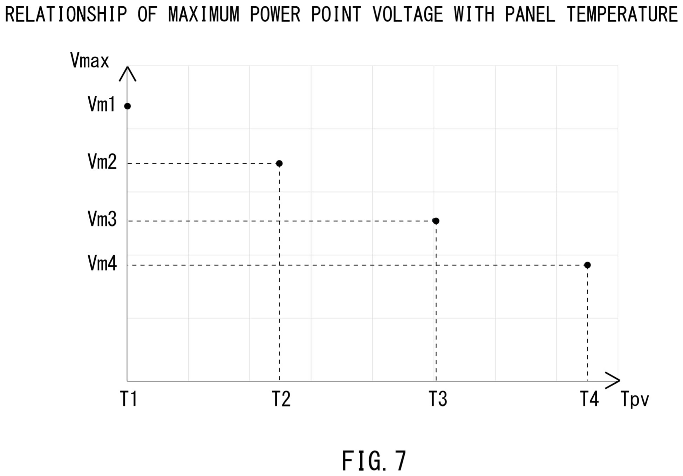

FIG. 7 is a graph showing a relationship of the maximum power point voltage with the panel temperature of FIG. 6. In the graph of FIG. 7, Vm1, Vm2, Vm3, and Vm4 are the maximum power point voltages corresponding to the panel temperatures T1, T2, T3, and T4, respectively. As shown in FIG. 7, there is a certain relationship between the panel temperature Tpv and the maximum power point voltage Vmax. In the present embodiment, the maximum power point voltage calculator 31 estimates the maximum power point voltage Vmax from the panel temperature Tpv by using an equation shown below.

[Math. 7]

$$Vmax = w_1 \cdot Tpv + w_2 \quad \cdots (9)$$

In the above equation, parameters $w_1$ and $w_2$ are determined from experimental data of the panel temperature Tpv and the maximum power point voltage Vmax of the photovoltaic panel 3, i.e., determined from the data at the four points in the example of FIG. 7 by a known curve fitting technique, such as the least-squares method. As indicated by the above equation, the equation expressing the correlation between the panel temperature Tpv and the maximum power point voltage Vmax may be determined by linear regression, or may be determined by non-linear regression by using a higher-order polynomial such as a quadratic function.

[Advantageous Effects]

According to the present embodiment, the operating point voltage target value Vref is calculated based on the maximum power point voltage Vmax of the photovoltaic panel 3. This makes it possible to adjust the output power Ppv of the photovoltaic panel 3 in accordance with a fluctuation in the frequency f of the AC power supply system 2. At the time, the operating point voltage target value Vref is calculated in accordance with the frequency f of the AC power supply system 2 so as to suppress the frequency f from fluctuating.

In the present embodiment, the operating point voltage reference value Vo is calculated from the maximum power point voltage Vmax, and the operating point voltage reference value Vo is corrected by using the voltage correction value Vcmp corresponding to a fluctuation in the frequency f.

As described above, since the operating point voltage target value Vref changes in accordance with the frequency f, fluctuations in the frequency f can be suppressed with the output power Ppv of the photovoltaic panel 3. This makes it possible to maintain the stability of the AC power supply system 2 against frequency fluctuations in the system 2.

Further, in the present embodiment, the voltage correction value Vcmp corresponding to a fluctuation in the frequency f includes: the first correction value Vc1, which is obtained by performing proportional calculation on the frequency deviation $\Delta f$; and the second correction value Vc2, which is obtained by performing differentiation on the frequency deviation $\Delta f$. As a result of the first correction value Vc1 being included in the operating point voltage target value Vref, the relationship of the frequency f with the DC voltage Vpv outputted from the photovoltaic panel 3 has droop characteristics. This enables the photovoltaic power generation equipment 1 to have supply-demand adjustment capability to correct the electric power that the power converter 4 outputs to the AC wiring 5 in accordance with the amount of deviation of the frequency f from the rated frequency.

Further, as a result of the second correction value Vc2 being included in the operating point voltage target value Vref, the photovoltaic power generation equipment 1 can have inertia against fluctuations in the frequency f. This makes it possible to suppress frequency fluctuations due to load variations.

By adjusting the proportional gain Kp1 for calculating the first correction value Vc1, the supply-demand adjustment capability can be adjusted. Further, the inertia can be adjusted by adjusting the coefficients $T_{d1}$ and $T_{d2}$, which are based on the derivative time for calculating the second correction value Vc2. Therefore, the required supply-demand adjustment capability and inertia can be adjusted in accordance with the state of the AC power supply system 2, to which the photovoltaic power generation equipment 1 is connected, and the purpose of providing the AC power supply system 2 with electric power.

Further, in the present embodiment, the maximum power point voltage Vmax, on which the operating point voltage target value Vref is based, is estimated from the panel temperature Tpv of the photovoltaic panel 3. The maximum power point voltage Vmax changes in accordance with a change in the panel temperature Tpv. Therefore, by obtaining the panel temperature Tpv, the maximum power point voltage Vmax can be readily estimated with high precision.

As described above, the maximum power point voltage Vmax is hardly affected by a change in irradiance. Therefore, even if the irradiance rapidly changes due to, for example, a rapid change in weather, the output power Ppv of the photovoltaic panel 3 can be controlled with high followability. Since the voltage is used as a target value, the electric power corresponding thereto automatically changes in accordance with a change in irradiance. Accordingly, electric power corresponding to a change in irradiance can be outputted by controlling the output power Ppv of the photovoltaic panel 3 by using the operating point voltage target value Vref.

In the present embodiment, since the power adjustment is performed in the photovoltaic power generation equipment 1, no electrical storage device is necessary. As a method for providing the photovoltaic power generation equipment 1 with the power adjustment function, other than the present embodiment, virtual synchronous generator model control is known, in which a power supply that supplies electric power via the power converter 4 is provided with an emulated inertia function. However, in order to perform such control, an electrical storage device needs to be installed. The necessity of the installation of an electrical storage device results in an increase in the initial cost of the photovoltaic power generation equipment 1.

On the other hand, in the present embodiment, no installation of an electrical storage device is necessary. Therefore, the photovoltaic power generation equipment 1 can be readily provided with power adjustment capability while avoiding an increase in the initial cost. Further, in the present embodiment, since no electrical storage device is necessary, the photovoltaic power generation equipment 1, which is existing photovoltaic power generation equipment and which is originally not provided with power adjustment capability, can be readily provided with power adjustment capability at low cost.

[Simulation Results]

(1) Simulation of a case where the frequency has changed in a ramp-like manner.

Hereinafter, as Simulation 1, results of a simulation of a case where the frequency f has changed in a ramp-like manner in the AC power supply system 2 of the above-described embodiment are described. Simulation 1 is, as an example, a simulation of the behavior of the photovoltaic power generation equipment 1 in a case where the frequency f has decreased by 5% over one second in the AC power supply system 2 shown in FIG. 1. In this simulation, the panel temperature Tpv and irradiance D are constant. Further, in this simulation, similar to the example of FIG. 3, a value resulting from adding up the first correction value Vc1, which is obtained by performing proportional calculation on the frequency deviation $\Delta f$, and the second correction value Vc2, which is obtained by performing differentiation on the frequency deviation $\Delta f$, is used as the voltage correction value Vcmp for the operating point voltage reference value Vo.

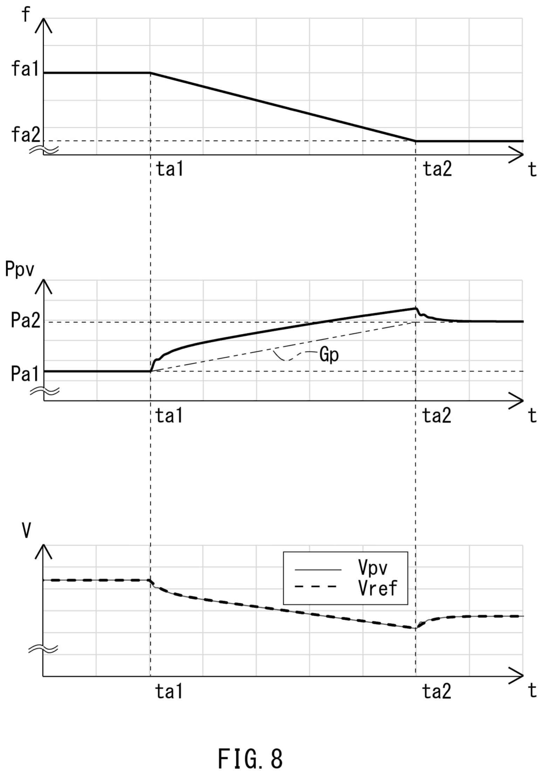

FIG. 8 is a graph showing changes in the frequency f, output power Ppv, and operating point voltage Vpv in Simulation 1 in relation to time t. In this simulation, the frequency f is changed such that the frequency f starts decreasing at a time point ta1 from an initial value fa1, and such that the frequency f at a time point ta2, which is one second after the time point ta1, becomes fa2, which is 95% of the initial value fa1.

In the graph shown at the bottom of FIG. 8, a graph of the operating point voltage Vpv is represented by a solid line, and a graph of the operating point voltage target value Vref is represented by a dashed line. In this simulation, the operating point voltage target value Vref changes at the time point ta1 in accordance with a fluctuation in the frequency f, and becomes steady immediately after the time point ta2. The operating point voltage Vpv changes in substantially the same manner as the operating point voltage target value Vref does.

In accordance with the changes in the operating point voltage Vpv, the output power Ppv of the photovoltaic panel 3 starts increasing at the time point ta1 from an initial value Pa1, becomes a value Pa2 immediately after the time point ta2, and becomes steady at the value Pa2. Thus, this simulation shows that the output power Ppv of the photovoltaic panel 3 transitions from Pa1 to Pa2 in accordance with the fluctuation in the frequency f. The reason for this is that the voltage correction value Vcmp includes the first correction value Vc1, which is a proportional calculation component. Thus, this simulation exhibits that the photovoltaic power generation equipment 1 has supply-demand adjustment capability to correct the electric power that the power converter 4 outputs to the AC wiring 5 in accordance with the amount of deviation of the frequency f from the rated frequency.

The output power Ppv of the photovoltaic panel 3 rises rapidly in response to the fluctuation in the frequency f at the time point ta1. In the graph of FIG. 8 in which temporal changes in the output power Ppv are shown, a graph Gp in a case where the voltage correction value Vcmp is only the first correction value Vc1 is indicated as a virtual line. As a result of the voltage correction value Vcmp including the second correction value Vc2, which is a differentiation component, electric power greater than the electric power value on the graph Gp is outputted during a period from the time point ta1 to the time point ta2. Thus, this simulation exhibits that the photovoltaic power generation equipment 1 has inertia against the fluctuation in the frequency f.

(2) Simulation of a case where the irradiance has changed in a ramp-like manner.

Hereinafter, as Simulation 2, results of a simulation of a case where the irradiance D has changed in a ramp-like manner in the AC power supply system 2 of the above-described embodiment are described. Simulation 2 is a simulation of the behavior of the photovoltaic power generation equipment 1 in a case where the irradiance D has decreased by 400 W/m$^2$ over 0.1 seconds in the AC power supply system 2 shown in FIG. 1. In this simulation, the panel temperature Tpv and the frequency f are constant. Further, in this simulation, similar to the example of FIG. 3, a value resulting from adding up the first correction value Vc1, which is obtained by performing proportional calculation on the frequency deviation $\Delta f$, and the second correction value Vc2, which is obtained by performing differentiation on the frequency deviation $\Delta f$, is used as the voltage correction value Vcmp for the operating point voltage reference value Vo.

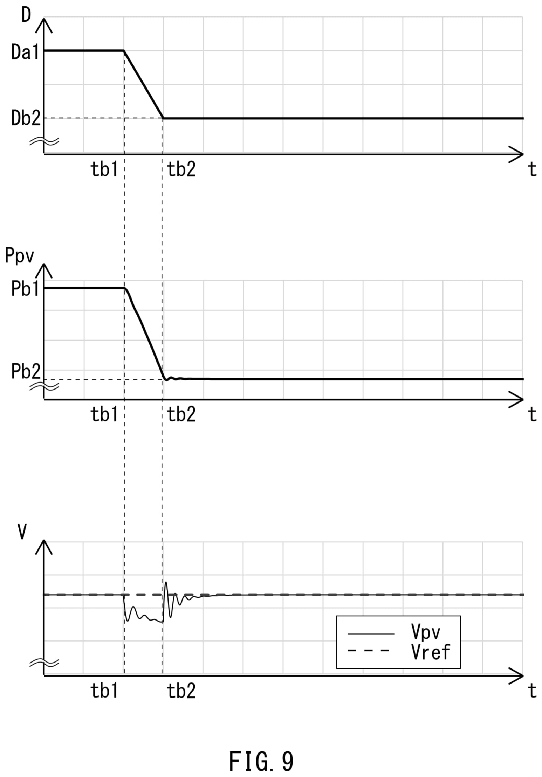

FIG. 9 is a graph showing changes in the irradiance D, output power Ppv, and operating point voltage Vpv in Simulation 2 in relation to time t. In this simulation, the irradiance D is changed such that the irradiance D starts decreasing at a time point tb1 from an initial value Db1, and such that the irradiance D at a time point tb2, which is 0.1 seconds after the time point tb1, becomes Db2, which is less than the initial value Db1 by 400 W/m$^2$.

In the graph at the bottom of FIG. 9, a graph of the operating point voltage Vpv is represented by a solid line, and a graph of the operating point voltage target value Vref is represented by a dashed line. In this simulation, since the panel temperature Tpv and the frequency f do not fluctuate, the operating point voltage target value Vref is constant. Immediately after the time point tb1, at which a change in the irradiance D starts occurring, the operating point voltage Vpv fluctuates instantaneously, but soon returns to the original operating point voltage Vpv.

The maximum generated power Pmax of the photovoltaic panel 3 decreases in accordance with a decrease in the irradiance D. Therefore, even though the operating point voltage target value Vref is constant, the output power Ppv of the photovoltaic panel 3 decreases since the electric current flowing through the photovoltaic panel 3 decreases. In this simulation, the output power Ppv starts decreasing at the time point tb1 from an initial value Pb1, becomes a value Pb2 at the time point tb2, and becomes steady at the value Pb2. Thus, this simulation exhibits that even when the irradiance D fluctuates, destabilization of the operating point voltage Vpv does not occur in the photovoltaic power generation equipment 1, and proper control can be continued.

Although the embodiment of the present disclosure has been described above, the present disclosure is not limited to the above embodiment, and various improvements, alterations, and modifications can be made to the above embodiment without departing from the scope of the present disclosure.

[Other Embodiments]

For example, the above embodiment has described the case in which the AC wiring 5 is a three-phase system. However, the AC wiring 5 is not limited to a three-phase system. For example, even in a case where the AC wiring 5 is a single-phase two-wire system or a single-phase three-wire system, the same photovoltaic power generation equipment 1 as that described in the above embodiment can be constructed except that, in such a case, methods by which to perform the various calculations differ in accordance with the system type of the AC wiring 5.

Further, in the above embodiment, the operating point voltage target value calculator 32 uses, as the voltage correction value Vcmp to be subtracted from the operating point voltage reference value Vo, a value obtained by performing proportional-derivative calculation on the frequency deviation $\Delta f$, i.e., a value resulting from adding up the first correction value Vc1, which is a proportional calculation component, and the second correction value Vc2, which is a differentiation component. However, this is merely a non-limiting example.

For example, as the voltage correction value Vcmp, only the first correction value Vc1 may be calculated. Specifically, the operating point voltage target value calculator 32 may calculate the voltage correction value Vcmp by performing proportional calculation on the deviation $\Delta f$ between the frequency f and the predetermined frequency target value fcmd. In this case, the photovoltaic power generation equipment 1 with supply-demand adjustment capability for the AC wiring 5 can be realized.

Alternatively, as the voltage correction value Vcmp, only the second correction value Vc2 may be calculated. Specifically, the operating point voltage target value calculator 32 may calculate the voltage correction value Vcmp by performing differentiation on the deviation $\Delta f$ between the frequency f and the predetermined frequency target value fcmd. In this case, the photovoltaic power generation equipment 1 with inertia for the AC wiring 5 can be realized.

The gain Kp1 in the proportional calculator 43 and the coefficients Td1 and Td2 in the differentiator 44 may be made adjustable. In such a case, after the photovoltaic power generation equipment 1 is connected to the AC power supply system 2, the balance between the supply-demand adjustment capability and the inertia of the photovoltaic power generation equipment 1 can be changed.

For example, in a case where fluctuations in the frequency f in the AC wiring 5 are small, the supply-demand adjustment capability of the photovoltaic power generation equipment 1 is less effective. Therefore, in this case, by prioritizing the adjustment of the inertia of the photovoltaic power generation equipment 1, suitable output adjustment can be performed. However, it is possible that when other power generation equipment, or loads, connected to the AC power supply system 2 are changed, trends in the AC wiring 5 may change, for example, the frequency f in the AC wiring 5 may fluctuate to a great degree. In such a case, it is conceivable to re-adjust the balance between the supply-demand adjustment capability and the inertia of the photovoltaic power generation equipment 1.

Thus, by adopting a configuration in which the gain Kp1 in the proportional calculator 43 and the coefficients Td1 and Td2 in the differentiator 44 are adjustable, even if a change in the trends in the AC wiring 5 occurs, suitable electric power output can be performed continuously.

Further, the above embodiment has illustratively described a mode in which, in the graph of the P-V characteristics of the photovoltaic panel 3 shown in FIG. 2, between the two operating points at which the output power equals the power target value Pref, the voltage at the operating point P2 on the right side is set as the operating point voltage target value Vref. Alternatively, the operating point P3 on the left side may be adopted as the operating point voltage target value Vref.

In this case, in the operating point voltage target value calculator 32, the coefficient Ko, which is multiplied by the maximum power point voltage Vmax to calculate the operating point voltage reference value Vo, is set to a value that is greater than 0 and less than 1. The power target value calculator 33 calculates, as the power target value Pref, a result of performing proportional-integral calculation on the voltage deviation $\Delta V$. That is, in a case where the operating point P3 on the left side is set as the operating point voltage target value Vref, the power target value calculator 33 does not include the inverter 49.

Further, the above embodiment has illustratively described a mode in which the relationship equation used by the maximum power point voltage calculator 31 to estimate the maximum power point voltage Vmax from the panel temperature Tpv detected by the temperature sensor 10 is determined from experimental data. Alternatively, the relationship equation between the panel temperature Tpv and the maximum power point voltage Vmax may be theoretically derived from a circuit equation of the photovoltaic panel 3.

The above embodiment has illustratively described a mode in which the output of the photovoltaic panel 3 is directly connected to the power converter 4. However, this is merely a non-limiting example. For example, a DC voltage converter may be incorporated in the DC wiring 6, which connects between the photovoltaic panel 3 and the power converter 4.

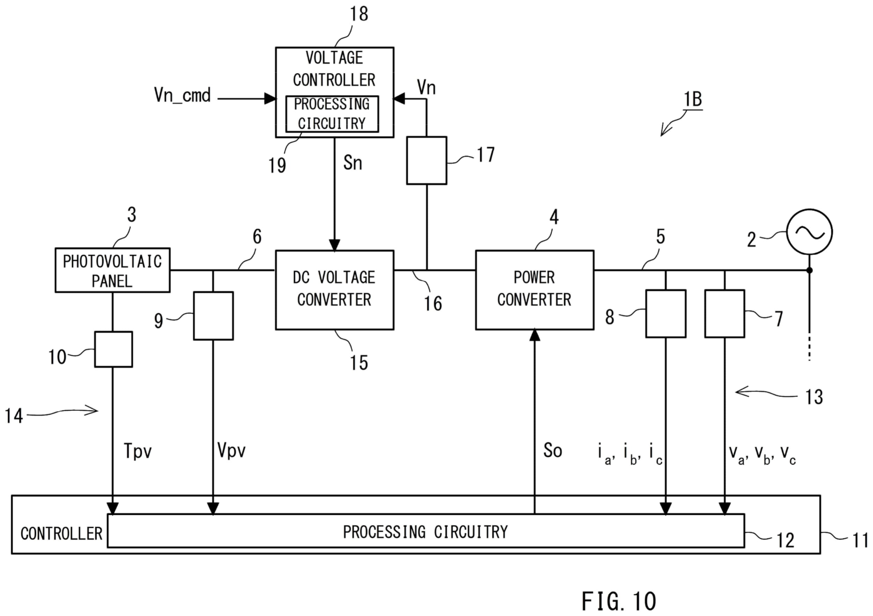

FIG. 10 is a block diagram showing a schematic configuration of photovoltaic power generation equipment in one variation of the present disclosure. In the present variation, the same components as those described in the above embodiment and shown in FIG. 1 are denoted by the same reference signs as those used in the above embodiment and shown in FIG. 1, and the description of such components is omitted.

The configuration of photovoltaic power generation equipment 1B in the present variation is different from the configuration shown in FIG. 1 in that a DC voltage converter 15 is incorporated in the DC wiring 6, which connects between the photovoltaic panel 3 and the power converter 4. In FIG. 10, the wiring between the photovoltaic panel 3 and the DC voltage converter 15 is the DC wiring 6, and the wiring between the DC voltage converter 15 and the power converter 4 is intermediate wiring 16.

The DC voltage converter 15 converts the DC voltage Vpv outputted from the photovoltaic panel 3 into a predetermined intermediate voltage Vn, and outputs the predetermined intermediate voltage Vn to the intermediate wiring 16 toward the power converter 4. Accordingly, the photovoltaic power generation equipment 1B in the present variation further includes an intermediate voltage detector 17 and a voltage controller 18.

The intermediate voltage detector 17 detects the intermediate voltage Vn, which is the DC voltage in the intermediate wiring 16. Similar to the controller 11, the voltage controller 18 includes processing circuitry 19. The processing circuitry 19 obtains the intermediate voltage Vn detected by the intermediate voltage detector 17. The processing circuitry 19 generates a drive signal Sn to drive the DC voltage converter 15, such that the intermediate voltage Vn coincides with a predetermined intermediate voltage target value Vn_cmd.

Accordingly, the DC voltage converter 15 is controlled to maintain the output voltage toward the power converter 4 constant. No adjustment in response to a fluctuation in the frequency f is performed by the DC voltage converter 15. Similar to the above-described embodiment, adjustment in response to a fluctuation in the frequency f is performed by the power converter 4. The processing circuitry 12 of the controller 11 includes the same control blocks as those of the above-described embodiment, and performs the same arithmetic processing.

Since the DC voltage converter 15 as described above is interposed between the photovoltaic panel 3 and the power converter 4, the voltage inputted to the power converter 4 from the photovoltaic panel 3 is maintained as a constant voltage. This makes it possible to effectively operate the power converter 4.

In the example of FIG. 10, the voltage controller 18, which controls the DC voltage converter 15, is described as another controller that is different from the controller 11 to control the power converter 4. Alternatively, the controller 11 to control the power converter 4 may control the DC voltage converter 15. That is, the processing circuitry 12 may include the processing circuitry 19 to perform control processing for the DC voltage converter 15.

[Summary of Present Disclosure]

[Item 1]

A controller of a power converter according to one aspect of the present disclosure is a controller of a power converter that performs electric power conversion between a photovoltaic panel and an AC power supply system, the controller including processing circuitry. The processing circuitry: obtains a frequency in AC wiring that connects between the AC power supply system and the power converter; obtains a maximum power point voltage of the photovoltaic panel; calculates such an operating point voltage target value of the photovoltaic panel as to suppress the frequency from fluctuating by using the maximum power point voltage and the frequency; and generates such a drive signal as to bring a DC voltage outputted from the photovoltaic panel to the operating point voltage target value of the photovoltaic panel, and outputs the drive signal to the power converter.

According to the above configuration, the operating point voltage target value is calculated based on the maximum power point voltage of the photovoltaic panel. This makes it possible to adjust the output power of the photovoltaic panel in accordance with a fluctuation in the frequency of the AC power supply system. At the time, the operating point voltage target value is calculated in accordance with the frequency of the AC power supply system so as to suppress the frequency from fluctuating.

As described above, since the operating point voltage target value changes in accordance with the frequency, fluctuations in the frequency can be suppressed with the output power of the photovoltaic panel. This makes it possible to maintain the stability of the AC power supply system against frequency fluctuations in the system.

[Item 2]

In the controller of item 1, the processing circuitry may: obtain a panel temperature of the photovoltaic panel; and estimate the maximum power point voltage from the panel temperature. The maximum power point voltage changes in accordance with a change in the panel temperature. Therefore, by obtaining the panel temperature, the maximum power point voltage can be readily estimated with high precision.

[Item 3]

In the controller of item 1 or 2, the processing circuitry may: calculate an operating point voltage reference value by multiplying the maximum power point voltage by a predetermined coefficient; and calculate the operating point voltage target value by subtracting a correction value corresponding to a fluctuation in the frequency from the operating point voltage reference value.

[Item 4]

In the controller of item 3, the processing circuitry may calculate the correction value by performing proportional calculation on a deviation between the frequency and a predetermined frequency target value. As a result of the correction value obtained by proportional calculation being included in the operating point voltage target value, the relationship of the frequency with the DC voltage outputted from the photovoltaic panel has droop characteristics. This enables the photovoltaic power generation equipment to have supply-demand adjustment capability to correct the electric power that the power converter outputs to the AC wiring in accordance with the amount of deviation of the frequency from the rated frequency.

[Item 5]

In the controller of item 3, the processing circuitry may calculate the correction value by performing differentiation on a deviation between the frequency and a predetermined frequency target value. As a result of the correction value obtained by differentiation being included in the operating point voltage target value, the photovoltaic power generation equipment can have inertia against fluctuations in the frequency. This makes it possible to suppress frequency fluctuations due to load variations.

[Item 6]

In the controller of claim 3, the processing circuitry may calculate the correction value by performing proportional-derivative calculation on a deviation between the frequency and a predetermined frequency target value. As a result of both the correction value obtained by proportional calculation and the correction value obtained by differentiation being included in the operating point voltage target value, the photovoltaic power generation equipment can have both supply-demand adjustment capability and inertia.

[Item 7]

In the controller of any one of items 1 to 6, the processing circuitry may: obtain the DC voltage; calculate a power target value by performing proportional-integral calculation on a deviation between the DC voltage and the operating point voltage target value; and generate the drive signal from the power target value.

[Item 8]

Photovoltaic power generation equipment according to another aspect of the present disclosure includes: a photovoltaic panel; a power converter that performs electric power conversion between the photovoltaic panel and an AC power supply system; a frequency obtaining circuit that obtains a frequency in AC wiring that connects between the AC power supply system and the power converter; a maximum power point voltage obtaining circuit that obtains a maximum power point voltage of the photovoltaic panel; and the controller of any one of items 1 to 7.

[Item 9]

In the photovoltaic power generation equipment of item 8, the maximum power point voltage obtaining circuit may include a temperature sensor that measures a panel temperature of the photovoltaic panel; and the processing circuitry may: obtain the panel temperature from the temperature sensor; and estimate the maximum power point voltage from the panel temperature.

[Item 10]

The photovoltaic power generation equipment of item 8 or 9 may include a DC voltage converter incorporated in a DC wiring that connects between the photovoltaic panel and the power converter. The DC voltage converter may convert a DC voltage outputted from the photovoltaic panel into a predetermined voltage, and output the predetermined voltage toward the power converter. Accordingly, even when the electric power outputted from the photovoltaic panel fluctuates in accordance with frequency fluctuations in the AC power supply system, the voltage inputted to the power converter is maintained as a constant voltage. This makes it possible to effectively operate the power converter.

[Item 11]

A method of controlling a power converter according to yet another aspect of the present disclosure is a method of controlling a power converter that performs electric power conversion between a photovoltaic panel and an AC power supply system, the method including: obtaining a frequency in AC wiring that connects between the AC power supply system and the power converter; obtaining a maximum power point voltage of the photovoltaic panel; calculating such an operating point voltage target value of the photovoltaic panel as to suppress the frequency from fluctuating by using the maximum power point voltage and the frequency; and generating such a drive signal as to bring a DC voltage outputted from the photovoltaic panel to the operating point voltage target value of the photovoltaic panel, and outputting the drive signal to the power converter.

**Reference Signs List**

| | |
|---|---|
| 1, 1B | photovoltaic power generation equipment |
| 2 | AC power supply system |
| 3 | photovoltaic panel |
| 4 | power converter |
| 5 | AC wiring |
| 6 | DC wiring |
| 10 | temperature sensor |
| 11 | controller |
| 12 | processing circuitry |
| 13 | frequency obtaining circuit |
| 14 | maximum power point voltage obtaining circuit |
| 15 | DC voltage converter |

**Claims**

1. A controller of a power converter that performs electric power conversion between a photovoltaic panel and an AC power supply system,

    the controller comprising processing circuitry, wherein
    the processing circuitry:

    obtains a frequency in AC wiring that connects between the AC power supply system and the power converter;
    obtains a maximum power point voltage of the photovoltaic panel;
    calculates such an operating point voltage target value of the photovoltaic panel as to suppress the frequency from fluctuating by using the maximum power point voltage and the frequency; and
    generates such a drive signal as to bring a DC voltage outputted from the photovoltaic panel to the operating point voltage target value of the photovoltaic panel, and outputs the drive signal to the power converter.

2. The controller according to claim 1, wherein
    the processing circuitry:

    obtains a panel temperature of the photovoltaic panel; and
    estimates the maximum power point voltage from the panel temperature.

3. The controller according to claim 1 or 2, wherein
    the processing circuitry:

    calculates an operating point voltage reference value by multiplying the maximum power point voltage by a predetermined coefficient; and
    calculates the operating point voltage target value by subtracting a correction value corresponding to a fluctuation in the frequency from the operating point voltage reference value.

4. The controller according to claim 3, wherein
the processing circuitry calculates the correction value by performing proportional calculation on a deviation between the frequency and a predetermined frequency target value.

5. The controller according to claim 3, wherein
the processing circuitry calculates the correction value by performing differentiation on a deviation between the frequency and a predetermined frequency target value.

6. The controller according to claim 3, wherein
the processing circuitry calculates the correction value by performing proportional-derivative calculation on a deviation between the frequency and a predetermined frequency target value.

7. The controller according to claim 1 or 2, wherein
the processing circuitry:

   obtains the DC voltage;
   calculates a power target value by performing proportional-integral calculation on a deviation between the DC voltage and the operating point voltage target value; and
   generates the drive signal from the power target value.

8. Photovoltaic power generation equipment comprising:

   a photovoltaic panel;
   a power converter that performs electric power conversion between the photovoltaic panel and an AC power supply system;
   a frequency obtaining circuit that obtains a frequency in AC wiring that connects between the AC power supply system and the power converter;
   a maximum power point voltage obtaining circuit that obtains a maximum power point voltage of the photovoltaic panel; and
   the controller according to claim 1.

9. The photovoltaic power generation equipment according to claim 8, wherein

   the maximum power point voltage obtaining circuit includes a temperature sensor that measures a panel temperature of the photovoltaic panel; and
   the processing circuitry:

      obtains the panel temperature from the temperature sensor; and
      estimates the maximum power point voltage from the panel temperature.

10. The photovoltaic power generation equipment according to claim 8 or 9, comprising a DC voltage converter incorporated in a DC wiring that connects between the photovoltaic panel and the power converter, wherein
the DC voltage converter converts a DC voltage outputted from the photovoltaic panel into a predetermined voltage, and outputs the predetermined voltage toward the power converter.

11. A method of controlling a power converter that performs electric power conversion between a photovoltaic panel and an AC power supply system, the method comprising:

   obtaining a frequency in AC wiring that connects between the AC power supply system and the power converter;
   obtaining a maximum power point voltage of the photovoltaic panel;
   calculating such an operating point voltage target value of the photovoltaic panel as to suppress the frequency from fluctuating by using the maximum power point voltage and the frequency; and
   generating such a drive signal as to bring a DC voltage outputted from the photovoltaic panel to the operating point voltage target value of the photovoltaic panel, and outputting the drive signal to the power converter.

FIG. 1

FIG. 2

FIG. 3

FIG. 4

P-V CHARACTERISTICS CORRESPONDING TO CHANGES IN IRRADIANCE

Ppv

D5
D4
D3
D2
D1

Vpv

D1 < D2 < D3 < D4 < D5

FIG. 5

P-V CHARACTERISTICS CORRESPONDING TO CHANGES IN PANEL TEMPERATURE

Ppv

T1
T2
T3
T4

Vpv

T1 < T2 < T3 < T4

FIG. 6

RELATIONSHIP OF MAXIMUM POWER POINT VOLTAGE WITH PANEL TEMPERATURE

FIG. 7

FIG. 8

FIG. 9

FIG. 10

## INTERNATIONAL SEARCH REPORT

| International application No. |
|---|
| **PCT/JP2024/004010** |

**A. CLASSIFICATION OF SUBJECT MATTER**

*H02M 7/48*(2007.01)i; *G05F 1/67*(2006.01)i; *H02J 3/38*(2006.01)i
FI:   H02M7/48 R; G05F1/67 A; H02J3/38 150

According to International Patent Classification (IPC) or to both national classification and IPC

**B. FIELDS SEARCHED**

Minimum documentation searched (classification system followed by classification symbols)

H02M7/42-7/98; G05F1/67; H02J3/00-5/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-25394 A (TOKYO ELECTRIC POWER COMPANY HOLDINGS, INC.) 13 February 2020 (2020-02-13) | 1, 8, 10-11 |
| | paragraphs [0017]-[0065], fig. 1-8 | |
| Y | | 2, 7, 9 |
| A | | 3–6 |
| Y | JP 2000-181555 A (NTT POWER & BUILDING FACILITIES INC.) 30 June 2000 (2000-06-30) | 2, 7, 9 |
| | paragraphs [0017]-[0050], fig. 1-4 | |
| A | | 3-6 |
| A | JP 2017-51072 A (YASKAWA ELECTRIC MFG. CO., LTD.) 09 March 2017 (2017-03-09) | 1-11 |
| | entire text, all drawings | |
| A | JP 2015-109721 A (DAIHEN CORP.) 11 June 2015 (2015-06-11) | 1-11 |
| | entire text, all drawings | |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/004010**

| Patent document cited in search report | | | Publication date (day/month/year) | Patent family member(s) | Publication date (day/month/year) |
|---|---|---|---|---|---|
| JP | 2020-25394 | A | 13 February 2020 | (Family: none) | |
| JP | 2000-181555 | A | 30 June 2000 | (Family: none) | |
| JP | 2017-51072 | A | 09 March 2017 | (Family: none) | |
| JP | 2015-109721 | A | 11 June 2015 | US 2015/0092462 A1 entire text, all drawings | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6592232 B